# EUROPEAN PATENT APPLICATION

(11) **EP 4 765 559 A1**
(43) Date of publication of application: **24.06.2026**
(21) Application number: 24892774.1
(22) Date of filing: 20.06.2024
(51) Int. Cl.: H02J 7/00

(54) **POWER SUPPLY SYSTEM AND BATTERY MANAGEMENT SYSTEM**

(30) Priority: 23.11.2023 CN 202323184282 U
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: XIANG, Jingfeng, Ningde, Fujian 352100 (CN); LI, Weiqiang, Ningde, Fujian 352100 (CN); WANG, Xingchang, Ningde, Fujian 352100 (CN)
(74) Representative: Ran, Handong
(86) International application number: PCT/CN2024/100390
(87) International publication number: WO 2025/107609

(57) **Abstract**

Disclosed in the present disclosure are a power supply system and a battery management system. The power supply system comprises: an input power supply used for providing an input voltage; a first voltage conversion circuit connected to an output end of the input power supply and used for carrying out voltage conversion on the input voltage provided by the input power supply to generate a first supply voltage; a second voltage conversion circuit used for carrying out voltage conversion on the first supply voltage to obtain a second supply voltage; and at least one voltage stabilizing circuit connected to at least one of the output end of the input power supply, an output end of the first voltage conversion circuit and an output end of the second voltage conversion circuit and used for carrying out voltage conversion on at least one of the input voltage, the first supply voltage and the second supply voltage to obtain at least one third supply voltage.

## Description

### CROSS-REFERENCE TO RELATED APPLICATIONS

This disclosure is based on Application No. 202323184282.9, filed on November 23, 2023, and entitled "POWER SUPPLY SYSTEM AND BATTERY MANAGEMENT SYSTEM", and claims priority to the Chinese Patent application, which is incorporated herein by reference in its entirety.

### TECHNICAL FIELD

This disclosure relates to the field of power supply control, and in particular, to a power supply system and a battery management system.

### BACKGROUND

A system of base chip (System of Base Chip, SBC) is an integrated power chip. The SBC can be configured to manage, control, regulate, and monitor power outputs of various voltage specifications, providing the respective power supplies required by different functional circuits in a device.

In related technologies, the SBC performs voltage conversion once on a voltage of the input power source through different buck-boost conversion modules or voltage regulator modules, converting the voltage of the input power source into multiple supply voltages. However, SBCs used in current new energy vehicles are generally expensive, and due to market supply and demand, which may pose high supply risks and cost disadvantages for users.

### SUMMARY

This disclosure primarily provides a power supply system and a battery management system that, through multiple voltage conversion methods, can not only replace the functionality of an SBC with a discrete multi-stage power system to provide various supply voltages but also reduce hardware costs of the product, improving circuit stability and flexibility of design.

The technical solution of this disclosure is implemented as follows:

According to a first aspect, an embodiment of this disclosure provides a power supply system, where the power supply system includes:
an input power source, configured to provide an input voltage;
a first voltage conversion circuit, where the first voltage conversion circuit is connected to an output end of the input power source and configured to perform voltage conversion on the input voltage provided by the input power source to generate a first supply voltage;
a second voltage conversion circuit, where the second voltage conversion circuit is connected to an output end of the first voltage conversion circuit and configured to perform voltage conversion on the first supply voltage to obtain a second supply voltage; and
at least one voltage regulator circuit, where the at least one voltage regulator circuit is respectively connected to at least one of an output end of the input power source, the output end of the first voltage conversion circuit, and an output end of the second voltage conversion circuit, and configured to perform voltage conversion on at least one of the input voltage, the first supply voltage, and the second supply voltage to obtain at least one third supply voltage.

Through the above technical means, the input voltage is subjected to voltage conversion through the first voltage conversion circuit, and further processed in multiple branches by the second voltage conversion circuit and the at least one voltage regulator circuit, providing the first supply voltage, the second supply voltage, and the at least one third supply voltage to electric modules with different voltage demands. This not only increases the range and number of supply voltage specifications, meeting the electrical voltage demands of different modules, but also enhances the precision and stability of voltage regulation.

In some embodiments, the at least one voltage regulator circuit includes a first voltage regulator circuit, where:
the first voltage regulator circuit is connected to the output end of the first voltage conversion circuit and configured to perform voltage conversion on the first supply voltage to obtain the third supply voltage.

Through the above technical means, the first supply voltage is subjected to voltage conversion by the first voltage regulator circuit to provide the third supply voltage to electric modules, meeting the voltage demands of different electric modules and enhancing the flexibility of the power supply system.

In some embodiments, the at least one voltage regulator circuit includes a second voltage regulator circuit, where:
the second voltage regulator circuit is connected to the output end of the second voltage conversion circuit and configured to perform voltage conversion on the second supply voltage to obtain the third supply voltage.

Through the above technical means, the second supply voltage is subjected to voltage conversion by the second voltage regulator circuit to provide the third supply voltage to electric modules, meeting the voltage demands of different electric modules and enhancing the flexibility of the power supply system.

In some embodiments, the at least one voltage regulator circuit includes a third voltage regulator circuit, where:
the third voltage regulator circuit is connected to the output end of the input power source and configured to perform voltage conversion on the input voltage to obtain the third supply voltage.

Through the above technical means, the input voltage is subjected to voltage conversion by the third voltage regulator circuit to provide the third supply voltage to electric modules, meeting the voltage demands of different electric modules and enhancing the flexibility of the power supply system.

In some embodiments, the at least one voltage regulator circuit further includes a fourth voltage regulator circuit, where:
the fourth voltage regulator circuit is connected to an output end of the third voltage regulator circuit and configured to perform voltage conversion on the third supply voltage output by the third voltage regulator circuit to obtain a fourth supply voltage.

Through the above technical means, the third supply voltage is subjected to voltage conversion by the fourth voltage regulator circuit to provide the fourth supply voltage to electric modules, meeting the voltage demands of different electric modules and enhancing the flexibility of the power supply system.

In some embodiments, the power supply system further includes a detection circuit, where:
the detection circuit is connected to an output end of a power supply module in the power supply system and configured to detect an output signal of the power supply module; where the power supply module includes at least one of the following: the first voltage conversion circuit, the second voltage conversion circuit, and the at least one voltage regulator circuit.

Through the above technical means, the detection circuit detects one or more circuits in the power supply module, preventing abnormal output signals, protecting the electric modules, and improving the safety of the power supply system.

In some embodiments, the detection circuit includes at least one voltage sampling circuit, where:
the at least one voltage sampling circuit is respectively connected to an output end of the power supply module and configured to perform voltage sampling detection on the output signal of the power supply module to obtain at least one voltage sampling signal;
where the output signal of the power supply module includes at least one of the following: the first supply voltage, the second supply voltage, and the at least one third supply voltage.

Through the above technical means, voltage sampling detection is performed on the output signals output by one or more circuits in the power supply module through the voltage sampling circuit, preventing damage to electric modules due to excessively high or low voltages of the output signals, thereby improving the safety of the power supply system.

In some embodiments, the voltage sampling circuit includes a first resistor, a second resistor, a third resistor, and a first capacitor, where:
a first end of the first resistor is connected to the output end of the power supply module, a second end of the first resistor is respectively connected to a first end of the second resistor and a first end of the third resistor, a second end of the second resistor is grounded, and a second end of the first capacitor is grounded; and
a second end of the third resistor is connected to a first end of the first capacitor and configured to output the voltage sampling signal.

Through the above technical means, voltage sampling is performed using a voltage divider resistor approach, preventing damage to electric modules due to excessively high or low voltages of the output signals, thereby improving the safety of the power supply system.

In some embodiments, the detection circuit includes at least one current sampling circuit, where:
the at least one current sampling circuit is respectively connected to the output end of the power supply module and configured to perform current sampling detection on the output signal of the power supply module to obtain at least one current sampling signal;
where the output signal of the power supply module includes at least one of the following: a first supply current output by the first voltage conversion circuit, a second supply current output by the second voltage conversion circuit, and at least one third supply current output by the at least one voltage regulator circuit.

Through the above technical means, current sampling detection is performed on the output signals of one or more circuits in the power supply module, preventing damage to electric modules due to excessively high or low current values of the output signals, thereby improving the safety of the power supply system.

In some embodiments, the first voltage conversion circuit is further configured to receive a wake-up signal, and to control the first voltage conversion circuit to be in an off state, so as to power down the power supply system when the wake-up signal is at a low level, or to control the first voltage conversion circuit to be in an operating state, so as to power on the power supply system when the wake-up signal is at a high level

Through the above technical means, the first voltage conversion circuit is controlled through the wake-up signal to control the power-on and sleep-mode power-down of the power supply system, so that the power supply system enters a lower power consumption state when not required to operate, thus saving power consumption of the power supply system.

In some embodiments, the power supply system further includes an enable circuit, where the enable circuit is respectively connected to an enable end of the second voltage conversion circuit and an enable end of the at least one voltage regulator circuit, where:
the enable circuit is configured to send a first enable signal to the second voltage conversion circuit and to control the power-on or power-down of the second voltage conversion circuit based on the first enable signal;
the enable circuit is further configured to send respective second enable signals to the at least one voltage regulator circuit and to respectively control the power-on or power-down of the at least one voltage regulator circuit based on the second enable signals.

Through the above technical means, the enable signal output by the enable circuit respectively controls the power-on or power-down of the second voltage conversion circuit and at least one voltage regulator circuit, reducing power consumption of the power supply system and enhancing the flexibility of the power supply system.

In some embodiments, the first voltage conversion circuit and the second voltage conversion circuit are buck-boost type direct current conversion circuits.

Through the above technical means, the first voltage conversion circuit and the second voltage conversion circuit are configured as buck-boost type direct current conversion circuits to supply power to electric modules requiring direct current voltage, thereby meeting the power supply needs of different electric modules.

According to a second aspect, an embodiment of this disclosure provides a battery management system, where the battery management system includes at least one functional circuit and the power supply system as described in the first aspect;
where the power supply system is configured to provide the required power supplies to the at least one functional circuit.

Through the above technical means, the power supply system provides power supplies to the at least one functional circuit, meeting the power demands of the at least one functional circuit and improving the precision and stability of the power supply in the battery management system.

This disclosure provides a power supply system and a battery management system that, through different voltage conversion combinations of the first voltage conversion circuit, the second voltage conversion circuit, and the voltage regulator circuit, convert the input voltage respectively into the first supply voltage, the second supply voltage, and at least one third supply voltage. This not only enables the use of a discrete multi-stage power system to replace the functionality of the SBC, providing multiple supply voltages and improving circuit stability and flexibility, but also reduces hardware costs of the circuit design and addresses the supply risk issues associated with SBCs.

### BRIEF DESCRIPTION OF DRAWINGS

FIG. 1 is a schematic structural diagram of a constituent of an SBC chip;
FIG. 2 is a first schematic structural diagram of a constituent of a power supply system provided by an embodiment of this disclosure;
FIG. 3 is a second schematic structural diagram of a constituent of a power supply system provided by an embodiment of this disclosure;
FIG. 4 is a third schematic structural diagram of a constituent of a power supply system provided by an embodiment of this disclosure;
FIG. 5 is a fourth schematic structural diagram of a constituent of a power supply system provided by an embodiment of this disclosure;
FIG. 6 is a first schematic structural diagram of a constituent of a voltage sampling circuit provided by an embodiment of this disclosure;
FIG. 7 is a second schematic structural diagram of a constituent of a voltage sampling circuit provided by an embodiment of this disclosure;
FIG. 8 is a first schematic structural diagram of a constituent of a current sampling circuit provided by an embodiment of this disclosure;
FIG. 9 is a second schematic structural diagram of a constituent of a current sampling circuit provided by an embodiment of this disclosure;
FIG. 10 is a fifth schematic structural diagram of a constituent of a power supply system provided by an embodiment of this disclosure; and
FIG. 11 is a schematic structural diagram of a constituent of a battery management system provided by an embodiment of this disclosure.

### DESCRIPTION OF EMBODIMENTS

To provide a more detailed understanding of the features and technical content of the embodiments of this disclosure, the implementation of the embodiments of this disclosure is described in detail below in conjunction with the drawings. The attached drawings are for reference and illustration only and are not intended to limit the embodiments of this disclosure.

Unless otherwise defined, all technical and scientific terms used herein shall have the same meanings as commonly understood by those skilled in the art to which this disclosure relates. The terms used herein are intended to merely describe the embodiments rather than to limit this disclosure and are not intended to limit this disclosure.

In the following description, references to "some embodiments" describe a subset of all possible embodiments, but it is understood that "some embodiments" may be the same or different subsets of all possible embodiments and can be combined with each other without conflict.

It should also be noted that the terms "first", "second", and "third" in the embodiments of this disclosure are used only to distinguish similar objects and do not represent a specific ordering of the objects. It is understood that "first", "second", and "third" can be interchanged in specific order or sequence where permitted, so that the embodiments of this disclosure described herein can be implemented in an order other than that illustrated or described herein.

In a battery management system (Battery Management System, BMS), multiple power supplies with different voltages are required to supply power to various modules. In related technologies, this function is implemented by an SBC chip, where the SBC chip is an integrated chip including functions such as wake-up, diagnostics, reset, and power output. The SBC chip generally provides multiple external interfaces to output different voltages to different modules.

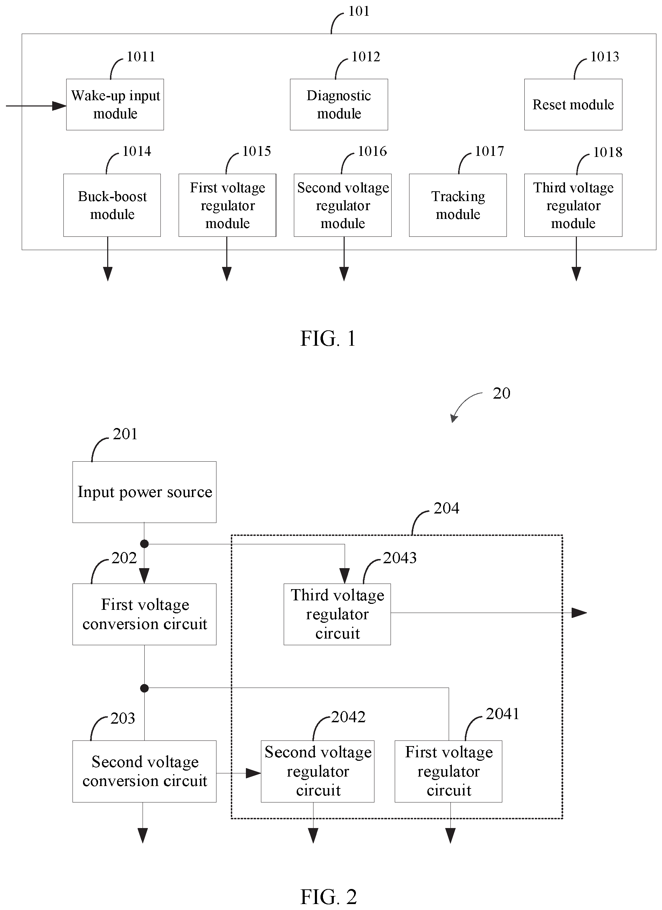

FIG. 1 is a schematic structural diagram of a constituent of an SBC chip. As shown in FIG. 1, an SBC chip 101 may include multiple modules for voltage conversion, where a buck-boost module 1014, also referred to as a Buck/Boost module, is configured to step down the voltage of an input power source to supply power to other modules in the BMS. For example, the input power source may be a battery with a voltage range of 11 V to 15 V, and the voltage output by the buck-boost module 1014 may be 7 V or 5 V; a first voltage regulator module 1015, also referred to as an LDO_uC module, is configured to regulate and step down the voltage of the input power source to supply power to a main chip in the BMS; a second voltage regulator module 1016, also referred to as an LDO_Com module, is configured to regulate and step down the voltage of the input power source to supply power to the communication module in the BMS; and a third voltage regulator module 1018, also referred to as an LDO_Ref module, is configured to regulate and step down the voltage of the input power source to supply power to the amplifier module. It can be understood that the output voltages of the first voltage regulator module 1015, the second voltage regulator module 1016, and the third voltage regulator module 1018 can be set according to the voltage demands of the functional circuits, also referred to as electric modules hereinafter. For example, the output voltage may be 5 V or 7 V.

In related technologies, the SBC chip 101 may further include a wake-up input module 1011, also referred to as a Wake Input module, configured to receive an externally input wake-up signal to start the SBC chip.

The SBC chip 101 may further include a diagnostic module 1012, also referred to as a Diagnosis module, and configured to determine that the release of an operating state of the SBC chip is abnormal.

The SBC chip 101 may further include a reset module 1013, also referred to as a Watchdog/Reset module, configured to restart or reset the SBC chip when an abnormality occurs in the operating state of the SBC chip.

The SBC chip 101 may further include a tracking module 1017, also referred to as a Tracker module, configured for networking communication with other modules in the BMS.

Although in related technologies, using the above SBC chip in a BMS can supply power to multiple electric modules with different voltage demands in the BMS, SBCs used in current new energy vehicles are generally expensive, and due to market supply and demand, which may pose high supply risks and cost disadvantages for users. Therefore, the design of a discrete multi-stage power system is particularly important.

Based on the above technical issues, the embodiments of this disclosure provide a power supply system and a battery management system that, through different voltage conversion combinations of a first voltage conversion circuit, a second voltage conversion circuit, and at least one voltage regulator circuit, convert the input voltage respectively into a first supply voltage, a second supply voltage, and at least one third supply voltage. This not only enables the use of a discrete multi-stage power system to replace the functionality of an SBC, providing multiple supply voltages, but also reduces hardware costs of the product, improving circuit stability and flexibility of design.

This disclosure is further described in detail below with reference to the drawings and specific embodiments.

FIG. 2 is a first schematic structural diagram of a constituent of a power supply system provided by an embodiment of this disclosure. As shown in FIG. 2, the power supply system 20 may include:
an input power source 201, configured to provide an input voltage;
a first voltage conversion circuit 202, where the first voltage conversion circuit 202 is connected to an output end of the input power source 201 and configured to perform voltage conversion on the input voltage provided by the input power source 201 to generate a first supply voltage;
a second voltage conversion circuit 203, where the second voltage conversion circuit 203 is connected to an output end of the first voltage conversion circuit 202 and configured to perform voltage conversion on the first supply voltage to obtain a second supply voltage; and
at least one voltage regulator circuit 204, where the at least one voltage regulator circuit 204 is respectively connected to at least one of an output end of the input power source 201, the output end of the first voltage conversion circuit 202, and an output end of the second voltage conversion circuit 203, and configured to perform voltage conversion on at least one of the input voltage, the first supply voltage, and the second supply voltage to obtain at least one third supply voltage.

In the embodiments of this disclosure, the input power source 201 may be a battery with a voltage range of 11 V to 15 V. A positive terminal of the battery, also referred to as a KL30 terminal, may be connected to an input end of the first voltage conversion circuit 202 to provide an input voltage with a range of 11 V to 15 V to the first voltage conversion circuit 202.

It can be understood that the voltage range of the battery as the input power source 201 may also be other values, determined specifically based on the voltage demands of the electric modules in the BMS.

In the embodiments of this disclosure, for the first voltage conversion circuit 202, voltage conversion can be performed on the input voltage provided by the input power source 201 to generate the first supply voltage.

The first voltage conversion circuit 202 may be a buck-boost (Buck-Boost) converter capable of stepping down or stepping up the input voltage to output a regulated voltage less than or greater than the input voltage as the first supply voltage. It can be understood that, depending on the voltage conversion requirements of specific scenarios, the first voltage conversion circuit 202 may also be a more efficient Buck converter used solely for stepping down the input voltage or a Boost converter used solely for stepping up the input voltage.

In the embodiments of this disclosure, the input power source 201 is a direct current power source. If the electric module in the BMS also requires direct current voltage, the first voltage conversion circuit 202 may be a direct current-direct current (DC-DC) type buck-boost converter. It can be understood that, depending on the voltage types of the input power source 201 and the electric module, the first voltage conversion circuit 202 may also be a direct current-alternating current (DC-AC) type buck-boost converter, an alternating current-direct current (AC-DC) type buck-boost converter, or an alternating current-alternating current (AC-AC) type buck-boost converter.

For example, when the input power source 201 is a battery, the input voltage provided to the first voltage conversion circuit 202 through the KL30 terminal may have a range of 11 V to 15 V, and after voltage conversion by the first voltage conversion circuit 202, the output first supply voltage may be 7.0 V.

In the embodiments of this disclosure, for the second voltage conversion circuit 203, voltage conversion can be performed on the first supply voltage to obtain the second supply voltage.

In the embodiments of this disclosure, the second voltage conversion circuit 203 may be a buck-boost converter of the same type as the first voltage conversion circuit 202 or a different type of buck-boost converter from the first voltage conversion circuit 202, determined specifically based on the voltage conversion requirements.

After the first voltage conversion circuit 202 performs one conversion on the input voltage, the output first supply voltage may still not meet the required voltage of some electric modules due to limitations in the voltage conversion range. In such cases, the second voltage conversion circuit 203 can perform voltage conversion on the first supply voltage again, stepping up or down the first supply voltage to output the second supply voltage.

For example, if the first supply voltage output by the first voltage conversion circuit 202 is 7.0 V, after further voltage conversion by the second voltage conversion circuit 203, the output second supply voltage may be 3.3 V.

In the embodiments of this disclosure, the at least one voltage regulator circuit 204 can be configured to perform voltage conversion on at least one of the input voltage, the first supply voltage, and the second supply voltage to obtain at least one third supply voltage.

The voltage regulator circuit 204 may be a low dropout regulator (low dropout regulator, LDO), which is a direct current or alternating current regulator capable of stepping down and regulating the input voltage.

As shown in FIG. 2, the voltage regulator circuit 204 may include multiple types, each voltage regulator circuit is connected to the output ends of different circuits, such as a first voltage regulator circuit 2041, a second voltage regulator circuit 2042, a third voltage regulator circuit 2043, and the like, where each type of voltage regulator circuit 204 may include multiple circuits outputting different supply voltages. Below, with the first voltage regulator circuit 2041, the second voltage regulator circuit 2042, and the third voltage regulator circuit 2043 each being one circuit as an example, the connection method of each voltage regulator circuit 204 is described.

In the embodiments of this disclosure, the first voltage regulator circuit 2041 may be provided, connected to the output end of the first voltage conversion circuit 202 and configured to perform voltage conversion on the first supply voltage to obtain at least one third supply voltage. It can be understood that the voltage of the third supply voltage output by different voltage regulator circuits 204 may be different. For example, if the first supply voltage is 7.0 V, after stepping down and regulating by the voltage regulator circuit 204, the output third supply voltage may be 5.0 V.

In the embodiments of this disclosure, the second voltage regulator circuit 2042 may also be provided, connected to the output end of the second voltage conversion circuit 203 and configured to perform voltage conversion on the second supply voltage to obtain at least one third supply voltage. It can be understood that the voltage of the third supply voltage output by different voltage regulator circuits 204 may be different. For example, if the second supply voltage is 3.3 V, after stepping down and regulating by the voltage regulator circuit 204, the output third supply voltage may be 1.2 V.

In the embodiments of this disclosure, the third voltage regulator circuit 2043 may be provided and connected to the output end of the input power source 201, and configured to perform voltage conversion on the input voltage to obtain at least one third supply voltage. It can be understood that the voltage of the third supply voltage output by different voltage regulator circuits 204 may be different. For example, when the input power source 201 is a battery with a voltage range of 11 V to 15 V, after stepping down and regulating by the voltage regulator circuit 204, the output third supply voltage may be 5.0 V.

It should be noted that multiple third voltage regulator circuits 2043 in the voltage regulator circuit 204 may be connected to the output end of the input power source 201, multiple first voltage regulator circuits 2041 in the voltage regulator circuit 204 may be connected to the output end of the first voltage conversion circuit 202, and multiple second voltage regulator circuits 2042 in the voltage regulator circuit 204 may be connected to the output end of the second voltage conversion circuit 203. The connection methods and quantities are determined based on the requirements of the electric modules, which are not exhaustively listed in the embodiments of this disclosure.

It can be understood that an electric module may be connected to one of the output end of the input power source 201, the output end of the first voltage conversion circuit 202, the output end of the second voltage conversion circuit 203, or the output end of the voltage regulator circuit 204, depending on the voltage demands, to access the input voltage, the first supply voltage, the second supply voltage, or the third supply voltage provided by any of the above output ends.

The embodiments of this disclosure provide a power supply system, the input voltage is subjected to voltage conversion through the first voltage conversion circuit, and further processed in multiple branches by the second voltage conversion circuit and at least one voltage regulator circuit, providing the first supply voltage, the second supply voltage, and at least one third supply voltage to electric modules with different voltage demands. This not only increases the range and number of supply voltage specifications, meeting the electrical voltage demands of different modules, but also enhances the precision and stability of voltage regulation.

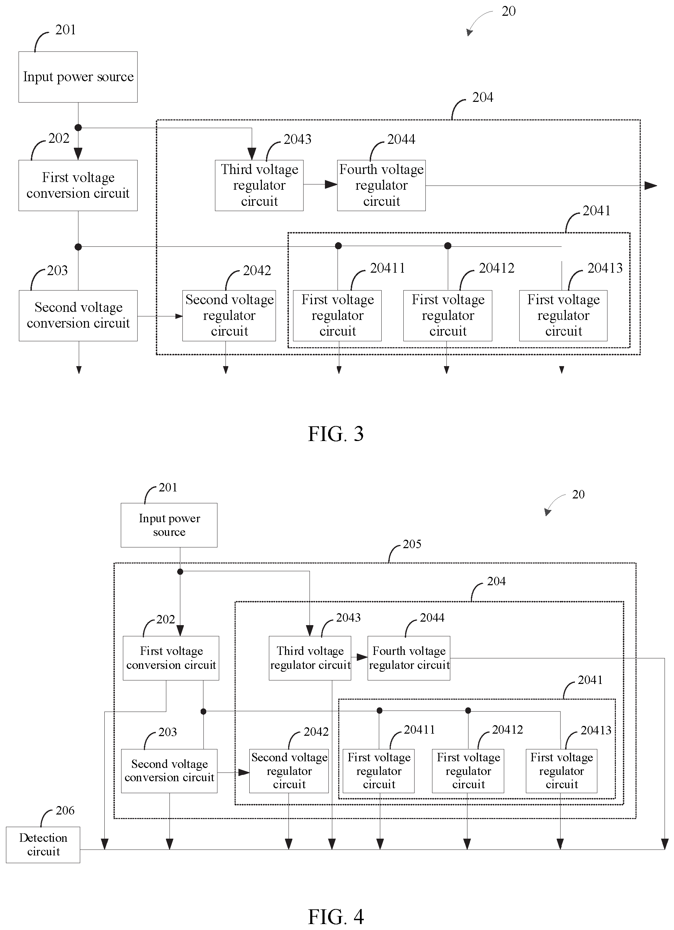

In another embodiment of this disclosure, FIG. 3 is a second schematic structural diagram of a constituent of a power supply system provided by an embodiment of this disclosure. As shown in FIG. 3, the at least one voltage regulator circuit 204 may include a first voltage regulator circuit 2041, where the first voltage regulator circuit 2041 is connected to the output end of the first voltage conversion circuit 202 and configured to perform voltage conversion on the first supply voltage to obtain the third supply voltage.

As in the previous embodiment, there may be multiple first voltage regulator circuits 2041, and the voltage values of the third supply voltage output may be the same or different. For example, as shown in FIG. 3, the first voltage regulator circuit 20411 may be referred to as an LDO_uC module, and configured to output a third supply voltage of 5.0 V to the main chip; the first voltage regulator circuit 20412 may be referred to as an LDO_communication module, and configured to output a third supply voltage of 5.0 V to a communication module; and the first voltage regulator circuit 20413 may be referred to as an LDO_Analog module, and configured to output a third supply voltage of 5.0 V to the analog module.

It can be understood that to achieve independent control of power-on and power-down for each electric module, the voltage values of the third supply voltage output by the first voltage regulator circuit 20411, the first voltage regulator circuit 20412, and the first voltage regulator circuit 20413 may be the same and respectively input to multiple electric modules with the same required voltage, or the voltage values of the third supply voltage output by the above circuits may be different and respectively input to multiple electric modules with different required voltages. Additionally, if space-saving is a consideration, multiple electric modules with the same required voltage may be combined and powered by the same first voltage regulator circuit 2041.

In some embodiments, referring to FIG. 3, the at least one voltage regulator circuit 204 may include a second voltage regulator circuit 2042, where the second voltage regulator circuit 2042 is connected to the output end of the second voltage conversion circuit 203 and configured to perform voltage conversion on the second supply voltage to obtain the third supply voltage.

Multiple second voltage regulator circuits 2042 may be provided. As shown in FIG. 3, the embodiment of this disclosure takes one second voltage regulator circuit 2042 as an example. The input voltage provided by the input power source 201 is subjected to two voltage conversions through the first voltage conversion circuit 202 and the second voltage conversion circuit 203, and the output second supply voltage may still not meet the voltage demands of some electric modules due to voltage drop limitations. The second voltage regulator circuit 2042 can perform voltage conversion on the second supply voltage again to output the third supply voltage to an electric device.

For example, the second voltage regulator circuit 2042 may be an LDO_Core module, and configured to output a third supply voltage of 1.2 V to a core power supply module.

In some embodiments, as shown in FIG. 3, the at least one voltage regulator circuit 204 includes a third voltage regulator circuit 2043, where the third voltage regulator circuit 2043 is connected to the output end of the input power source 201 and configured to perform voltage conversion on the input voltage to obtain the third supply voltage.

Multiple third voltage regulator circuits 2043 may be provided. As shown in FIG. 3, the embodiment of this disclosure takes one third voltage regulator circuit 2043 as an example. The third voltage regulator circuit 2043 may be directly connected to the output end of the input power source 201. When the first supply voltage output by the first voltage conversion circuit 202 and the second supply voltage output by the second voltage conversion circuit 203 cannot meet the voltage demands of the electric modules, the third voltage regulator circuit 2043 can directly perform voltage conversion on the input voltage within the voltage drop range to output the third supply voltage.

For example, the third voltage regulator circuit 2043 may be an LDO_CAN module, and configured to output a third supply voltage of 5.0 V to a controller area network (Controller Area Network, CAN) communication module.

Additionally, the third voltage regulator circuit 2043 directly steps down the input voltage provided by the input power source 201, and therefore, the third voltage regulator circuit 2043 can output the third supply voltage to the electric module after the first voltage conversion circuit 202, the second voltage conversion circuit 203, and the at least one voltage regulator circuit 204 are powered down, meeting the load power supply needs during the sleep mode of the power supply system 20.

In some embodiments, as shown in FIG. 3, the at least one voltage regulator circuit 204 further includes a fourth voltage regulator circuit 2044, where the fourth voltage regulator circuit 2044 is connected to the output end of the third voltage regulator circuit 2043 and configured to perform voltage conversion on the third supply voltage output by the third voltage regulator circuit 2043 to obtain a fourth supply voltage.

Multiple fourth voltage regulator circuits 2044 may be provided. As shown in FIG. 3, the embodiment of this disclosure takes one fourth voltage regulator circuit 2044 as an example. The fourth voltage regulator circuit 2044 may be connected to the output end of the third voltage regulator circuit 2043 to further step down the third supply voltage and output the fourth supply voltage to the electric device.

For example, the fourth voltage regulator circuit 2044 may be an LDO_RTC module, and configured to provide a fourth supply voltage of 3.3 V to a real-time clock (Real-Time Clock, RTC).

It should be noted that the number and output voltage ranges of the first voltage regulator circuit 2041, the second voltage regulator circuit 2042, the third voltage regulator circuit 2043, and the fourth voltage regulator circuit 2044 shown in FIG. 3 are merely examples, and the actual number and output voltage ranges may be determined based on the specific conditions of the electric modules. For example, the output end of the above voltage regulator circuits may also be connected to at least one voltage regulator circuit, which is not exhaustively listed in this disclosure.

The embodiments of this disclosure provide a power supply system, including a first voltage regulator circuit, a second voltage regulator circuit, a third voltage regulator circuit, and a fourth voltage regulator circuit, so that the input voltage is subjected to voltage conversion through multi-branch voltage regulator circuit to output multiple third supply voltages, meeting the voltage demands of different electric modules and enhancing the flexibility of the power supply system.

In another embodiment of this disclosure, FIG. 4 is a third schematic structural diagram of a constituent of a power supply system provided by an embodiment of this disclosure. As shown in FIG. 4, the power supply system 20 further includes a detection circuit 206, where the detection circuit 206 is connected to an output end of a power supply module 205 in the power supply system 20 and configured to detect an output signal of the power supply module 205; where the power supply module 205 includes at least one of the following: the first voltage conversion circuit 202, the second voltage conversion circuit 203, and the at least one voltage regulator circuit 204.

The power supply system 20 may also include a detection circuit 206, also referred to as a Diagnosis module. Detection points are set at the output ends of any of the first voltage conversion circuit 202, the second voltage conversion circuit 203, and the at least one voltage regulator circuit 204 to sample the current, voltage, temperature, or other output signals of any of the above circuits, so that the detection circuit 206 accurately determines information such as an output current value and a voltage value, preventing abnormal output conditions in the power supply system 20.

The detection circuit 206 may be a universal meter capable of detecting voltage and current, an oscilloscope displaying voltage and current waveforms, a current clamp meter capable of detecting voltage and current, or other circuits capable of detecting voltage and current, which are not exhaustively listed in this disclosure.

It can be understood that the detection circuit 206 may comprehensively detect the signals output by one, multiple, or all of the first voltage conversion circuit 202, the second voltage conversion circuit 203, and the at least one voltage regulator circuit 204. FIG. 4 illustrates an example where the detection circuit 206 detects all of the above circuits, and the actual connection is determined based on specific detection requirements.

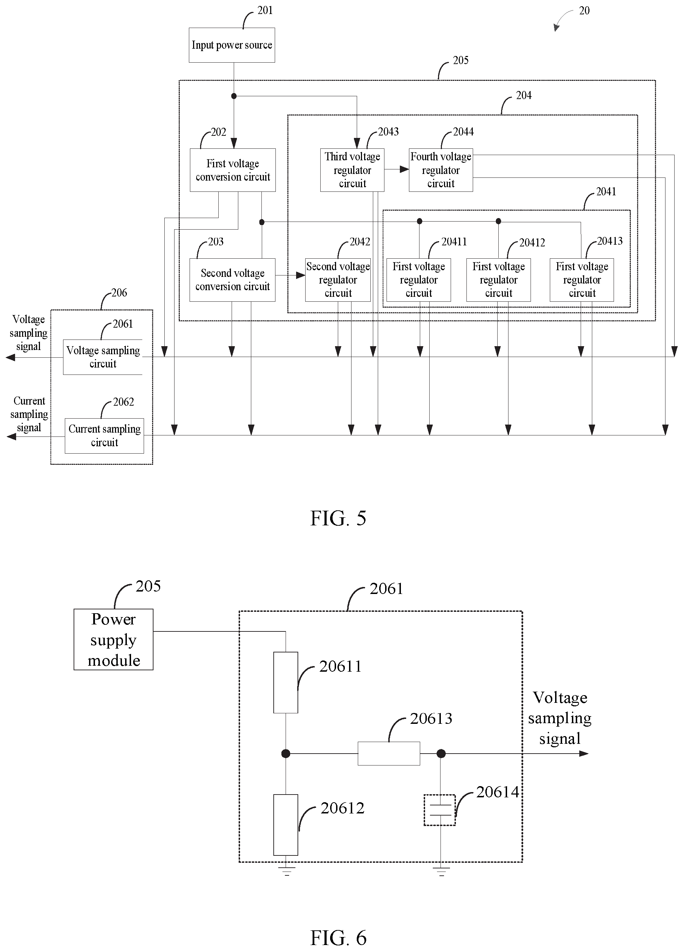

In some embodiments, FIG. 5 is a fourth schematic structural diagram of a constituent of a power supply system provided by an embodiment of this disclosure. As shown in FIG. 5, the detection circuit 206 includes at least one voltage sampling circuit 2061, where the at least one voltage sampling circuit 2061 is respectively connected to an output end of the power supply module 205 and configured to perform voltage sampling detection on the output signal of the power supply module 205 to obtain at least one voltage sampling signal; where the output signal of the power supply module 205 includes at least one of the following: the first supply voltage, the second supply voltage, and the at least one third supply voltage.

It can be understood that FIG. 5 shows only one connection method of the voltage sampling circuit 2061 with the power supply module 205, and the number of voltage sampling circuits 2061 may be set based on actual functional safety requirements. Additionally, based on the voltage values of the first supply voltage, the second supply voltage, and the third supply voltage in the output signals, one voltage sampling circuit 2061 may be set at the output end of each circuit in the power supply module 205 to perform voltage sampling detection on the output signal of each circuit, outputting at least one voltage sampling signal.

The voltage sampling circuit 2061 may be a voltage divider resistor sampling circuit, a battery sampling chip (analog front end, AFE) in a BMS capable of collecting voltage signals, or other circuits capable of collecting voltage signals.

In some embodiments, FIG. 6 is a first schematic structural diagram of a constituent of a voltage sampling circuit provided by an embodiment of this disclosure. Referring to FIG. 6, the voltage sampling circuit 2061 includes a first resistor 20611, a second resistor 20612, a third resistor 20613, and a first capacitor 20614, where a first end of the first resistor 20611 is connected to the output end of the power supply module 205, a second end of the first resistor 20611 is respectively connected to a first end of the second resistor 20612 and a first end of the third resistor 20613, a second end of the second resistor 20612 is grounded, and a second end of the first capacitor 20614 is grounded; and a second end of the third resistor 20613 is connected to a first end of the first capacitor 20614 and configured to output the voltage sampling signal.

The voltage sampling circuit 2061 may perform sampling using a voltage divider resistor approach. When the voltage sampling circuit 2061 is connected as shown in FIG. 6, the voltage sampling signal is generated by sampling the voltages at two ends of the second resistor 20612.

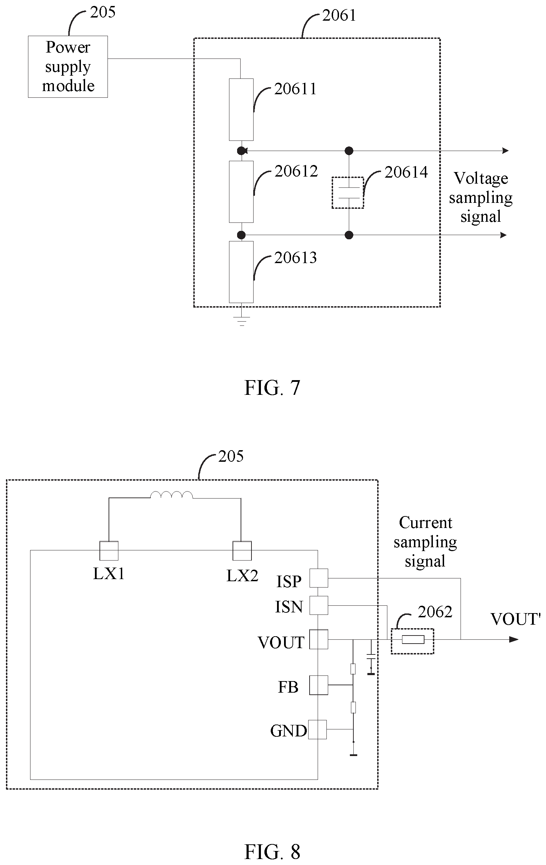

In some embodiments, FIG. 7 is a second schematic structural diagram of a constituent of a voltage sampling circuit provided by an embodiment of this disclosure. As shown in FIG. 7, another connection method of the voltage sampling circuit 2061 may be: A first end of the first resistor 20611 is connected to the output end of the power supply module 205, a second end of the first resistor 20611 is respectively connected to a first end of the second resistor 20612 and a first end of the first capacitor 20614, a second end of the second resistor 20612 is respectively connected to a first end of the third resistor 20613 and a second end of the first capacitor 20614, the voltage sampling signal is output by the two ends of the first capacitor 20614, and a second end of the third resistor 20613 is grounded.

FIG. 7 shows another connection method for the voltage sampling circuit 2061 using a voltage divider resistor approach for sampling. In this connection method, the voltage sampling signal is generated by sampling the voltages at two ends of the second resistor 20612.

In the embodiments of this disclosure, the voltage sampling circuit 2061 may adopt either of the connection methods shown in FIG. 6 or FIG. 7 or use other circuits for voltage detection. It can be understood that for the output end of the same circuit, when the voltage sampling circuit 2061 adopts different connection methods as shown in FIG. 6 or FIG. 7, the resistance values of the first resistor 20611, the second resistor 20612, and the third resistor 20613 may be different due to different sampling methods. Additionally, for current output ends with different voltage values, when the voltage sampling circuit 2061 adopts either the connection method of FIG. 6 or FIG. 7, the resistance values of the first resistor 20611, the second resistor 20612, and the third resistor 20613 may also be different due to different sampled voltages.

In another embodiment of this disclosure, as shown in FIG. 5, the detection circuit 206 may further include at least one current sampling circuit 2062, where the at least one current sampling circuit 2062 is respectively connected to the output end of the power supply module 205 and configured to perform current sampling detection on the output signal of the power supply module 205 to obtain at least one current sampling signal; where the output signal of the power supply module 205 includes at least one of the following: a first supply current output by the first voltage conversion circuit 202, a second supply current output by the second voltage conversion circuit 203, and at least one third supply current output by the at least one voltage regulator circuit 204.

In the embodiments of this disclosure, FIG. 5 shows an example of one connection method for the current sampling circuit 2062. The current sampling circuit 2062 may also be respectively provided at the output end of one or more of the first voltage conversion circuit 202, the second voltage conversion circuit 203, and the at least one voltage regulator circuit 204.

The current sampling circuit 2062 may be a circuit including a current sampling resistor, a circuit including a current sampling resistor and an operational amplifier, or other circuits capable of detecting current, which are not specifically limited herein.

In some embodiments, FIG. 8 is a first schematic structural diagram of a constituent of a current sampling circuit provided by an embodiment of this disclosure. As shown in FIG. 8, taking the power supply module 205 as a DC-DC voltage conversion chip as an example, the current sampling circuit 2062 may be a current sampling resistor, an output end VOUT of the DC-DC voltage conversion chip is connected to the current sampling resistor, one end of the current sampling resistor is connected to an ISN port and another end of the current sampling resistor is connected to an ISP port. Here, sampling is performed through the current sampling resistor to generate the current sampling signal. Additionally, as shown in FIG. 8, VOUT' is the voltage signal obtained after the VOUT port of the DC-DC voltage conversion chip passes through the current sampling resistor. Since the voltage drop across the current sampling resistor is small and negligible, the voltage at the VOUT port is approximately equal to an output voltage at VOUT'.

It can be understood that the resistance value of the current sampling resistor 20621 may vary depending on the different current values output by the first supply current, the second supply current, and the at least one third supply current output by the circuits in the power supply module 205 to which the current sampling circuit 2062 is connected.

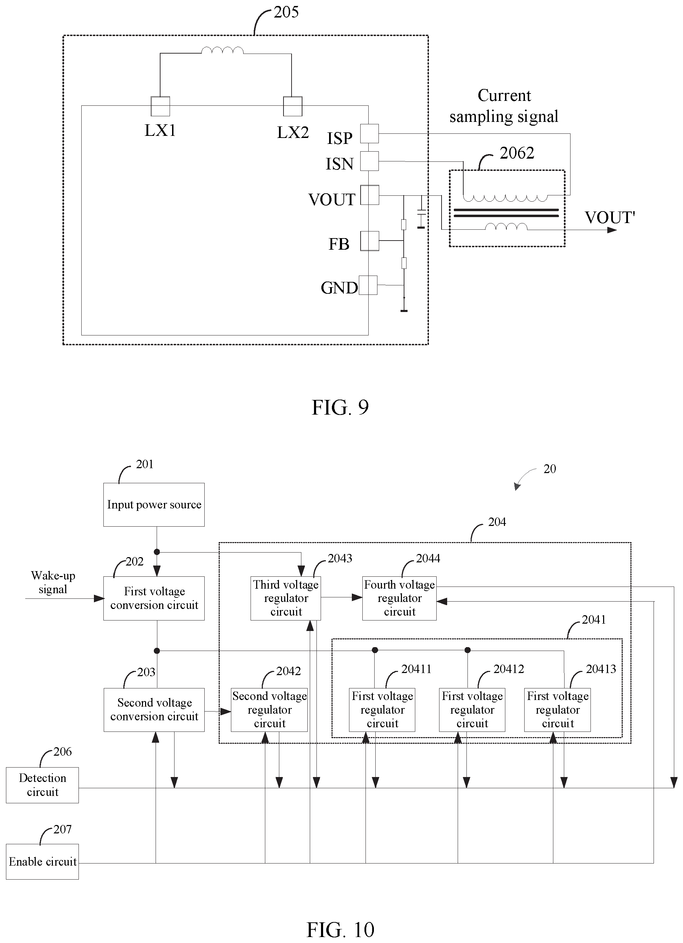

In some embodiments, FIG. 9 is a second schematic structural diagram of a constituent of a current sampling circuit provided by an embodiment of this disclosure. As shown in FIG. 9, taking the power supply module 205 as the first voltage conversion circuit or the second voltage conversion circuit as an example, the current sampling circuit 2062 may be a current transformer, the output end VOUT of the DC-DC voltage conversion chip is connected to the current transformer, one end of the current transformer is connected to the ISN port and another end of the current transformer is connected to the ISP port. Here, sampling is performed through the current transformer to generate the current sampling signal. Additionally, as shown in FIG. 9, VOUT' is the voltage signal obtained after the VOUT port of the DC-DC voltage conversion chip passes through the current transformer. Since the voltage drop across the current transformer is small and negligible, the voltage at the VOUT port is approximately equal to the output voltage at VOUT'.

The embodiments of this disclosure provide a power supply system, where the detection circuit includes a current sampling circuit and a voltage sampling circuit. The output signals of one or more circuits in the power supply module are detected, preventing damage to electric module due to abnormal output signals, thereby protecting the electric module and improving the safety of the power supply system.

In another embodiment of this disclosure, FIG. 10 is a fifth schematic structural diagram of a constituent of a power supply system provided by an embodiment of this disclosure. As shown in FIG. 10, the first voltage conversion circuit 202 is further configured to receive a wake-up signal, and to control the first voltage conversion circuit 202 to be in an off state, so as to power down the power supply system 20 when the wake-up signal is at a low level; or to control the first voltage conversion circuit 202 to be in an operating state, so as to power on the power supply system 20 when the wake-up signal is at a high level.

The wake-up signal may be provided by a controller controlling the power supply system 20, where the controller may be a microcontroller unit (Microcontroller Unit, MCU) in the BMS.

It can be understood that when the input wake-up signal is at a high level, the first voltage conversion circuit 202 is powered on and starts, the first supply voltage is output, the second voltage conversion circuit 203 and the at least one voltage regulator circuit 204 connected to the first voltage conversion circuit 202 are also powered on, and the second supply voltage and the at least one third supply voltage are output. When the input wake-up signal is at a low level, the first voltage conversion circuit 202 is powered down and stops outputting the first supply voltage. As a result, the second voltage conversion circuit 203 and at least one voltage regulator circuit 204 connected to the first voltage conversion circuit 202 are also powered down and are disabled from outputting the second supply voltage and at least one third supply voltage. Additionally, as in the previous embodiment, the wake-up signal is input to the third voltage regulator circuit 2043 and the fourth voltage regulator circuit 2044, so the third voltage regulator circuit 2043 and the fourth voltage regulator circuit 2044 can provide the third supply voltage and the fourth supply voltage to the electric modules after the first voltage conversion circuit 202 is powered down.

The embodiments of this disclosure provide a power supply system, the first voltage conversion circuit is controlled through a wake-up signal to control the power-on and sleep-mode power-down of the power supply system, so that the power supply system enters a lower power consumption state when not required to operate, thus saving power consumption of the power supply system.

In another embodiment of this disclosure, as shown in FIG. 10, the power supply system 20 may further include an enable circuit 207, where the enable circuit 207 is respectively connected to an enable end of the second voltage conversion circuit 203 and an enable end of the at least one voltage regulator circuit 204, where the enable circuit 207 is configured to send a first enable signal to the second voltage conversion circuit 203 and to control the power-on or power-down of the second voltage conversion circuit 203 based on the first enable signal.

In the embodiments of this disclosure, the first enable signal output by the enable circuit 207 may be a signal that activates or disables the enable end of the second voltage conversion circuit 203 to make the second voltage conversion circuit 203 output or not output the second supply voltage.

The enable circuit 207 is further configured to send respective second enable signals to the at least one voltage regulator circuit 204 and to respectively control the power-on or power-down of the at least one voltage regulator circuit 204 based on the second enable signals.

The first enable signal output by the enable circuit 207 may be a signal that activates or disables the enable end of the at least one voltage regulator circuit 204 to make the voltage regulator circuit 204 output or not output the third supply voltage.

It can be understood that FIG. 10 shows only one connection method for the enable circuit 207. Depending on the control needs of the circuits in the power supply system 20, an enable module 207 may be connected to one or more of the second voltage conversion circuit 203 and the at least one voltage regulator circuit 204, respectively sending enable signals to control the corresponding second voltage conversion circuit 203 or voltage regulator circuit 204 to power on or power down.

The embodiments of this disclosure provide a power supply system, including an enable circuit, the power-on or power-down of the second voltage conversion circuit and at least one voltage regulator circuit are respectively controlled through enable signals output by the enable circuit, reducing power consumption of the power supply system and enhancing the flexibility of the power supply system.

In another embodiment of this disclosure, the first voltage conversion circuit 202 and the second voltage conversion circuit 203 are buck-boost type direct current conversion circuits.

As in the previous embodiment, both the first voltage conversion circuit 202 and the second voltage conversion circuit 203 may be buck-boost (Buck-Boost) direct current conversion circuits configured to step up or step down the direct current input voltage input from the input power source 201 to convert into a direct current first supply voltage, or to step up or step down the direct current first supply voltage to convert into a direct current second supply voltage.

The embodiments of this disclosure provide a power supply system, where the first voltage conversion circuit and the second voltage conversion circuit are configured as buck-boost type direct current conversion circuits to supply power to electric modules requiring direct current voltage, thereby meeting the power supply needs of different electric modules.

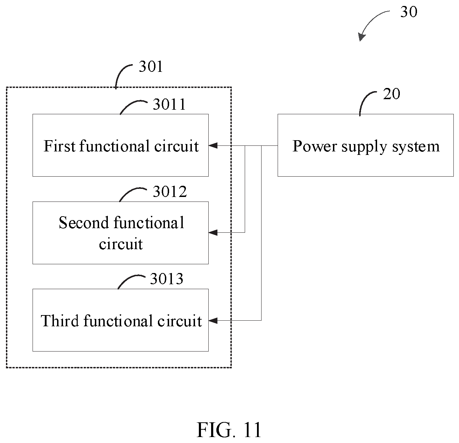

In another embodiment of this disclosure, FIG. 11 is a schematic structural diagram of a constituent of a battery management system 30 provided by an embodiment of this disclosure. As shown in FIG. 11, the battery management system 30 includes at least one functional circuit 301 and the power supply system 20 as described in the previous embodiments; where the power supply system 20 is configured to provide the required power supplies to the at least one functional circuit 301.

The functional circuit 301 may be an electric module in the above BMS system, also referred to as a load, for example, it may be a communication module, a main chip, a CAN communication module, or other circuits.

The functional circuit 301 may include one or more circuits. FIG. 11 shows an example of the connection situation when the functional circuit 301 includes three circuits: a first functional circuit 3011, a second functional circuit 3012, and a third functional circuit 3013, with the power supply system 20. It can be understood that, depending on actual conditions, there may be multiple functional circuits 301, each connected to the power supply system 20 for their respective required power supplies, based on their voltage demands.

The embodiments of this disclosure provide a battery management system, where the power supply system 20 provides the required power supplies to at least one functional circuit, meeting the voltage demands of different functional circuits.

The above descriptions are merely preferred embodiments of this disclosure but are not intended to limit the protection scope of this disclosure. Any modification, equivalent replacement, or improvement made without departing from the spirit and principle of this disclosure shall fall within the protection scope of this disclosure.

The embodiments of this disclosure also provide a computer program product containing instructions that, when run on a computer, cause the computer to perform the steps of the thermal control method provided by the above method embodiments.

It should be understood that the descriptions of the above storage medium and device embodiments are similar to those of the method embodiments, with similar beneficial effects as the method embodiments. For technical details not disclosed in the storage medium, storage medium, and device embodiments of this disclosure, please refer to the description of the method embodiments of this disclosure for understanding.

It should be understood that references to "one embodiment" or "an embodiment" or "some embodiments" throughout the specification mean that specific features, structures, or characteristics related to the embodiment are included in at least one embodiment of this disclosure. Therefore, appearances of "in one embodiment", "in an embodiment", or "in some embodiments" throughout the specification do not necessarily refer to the same embodiment. Furthermore, these specific features, structures, or characteristics may be combined in any suitable manner in one or more embodiments. It should be understood that in various embodiments of this disclosure, sequence numbers of the foregoing processes do not mean execution sequences. The execution sequences of the processes should be determined according to functions and internal logic of the processes, and should not be construed as any limitation on the implementation processes of the embodiments of this disclosure. The sequence numbers of the above embodiments of this disclosure are for description only and do not represent the superiority or inferiority of the embodiments. The descriptions of the various embodiments above tend to emphasize the differences between the embodiments, and their similarities or similarities can be cross-referenced. For brevity, details are not repeated herein.

It should also be noted that in this disclosure, the terms "include", "comprise", or any of their variants are intended to cover a non-exclusive inclusion, so that a process, method, article, or apparatus that includes a series of elements includes not only those elements but also other elements that are not expressly listed, or further includes elements inherent to such process, method, article, or apparatus. Without more constraints, an element preceded by "includes a ..." does not preclude the presence of other identical elements in the process, method, article, or apparatus that includes the element.

The sequence numbers of the above embodiments of this disclosure are for description only and do not represent the superiority or inferiority of the embodiments.

The methods disclosed in the several method embodiments provided by this disclosure can be arbitrarily combined without conflict to obtain new method embodiments.

The features disclosed in the several product embodiments provided by this disclosure can be arbitrarily combined without conflict to obtain new product embodiments.

The features disclosed in the several method or device embodiments provided by this disclosure can be arbitrarily combined without conflict to obtain new method embodiments or device embodiments.

The above descriptions are merely specific embodiments of this disclosure, but are not intended to limit the protection scope of this disclosure. Any variation or replacement readily figured out by persons skilled in the art within the technical scope disclosed in this disclosure shall fall within the protection scope of this disclosure. Therefore, the protection scope of this disclosure shall be subject to the protection scope of the claims.

### Industrial Applicability

This disclosure provides a power supply system and a battery management system that, through different voltage conversion combinations of a first voltage conversion circuit, a second voltage conversion circuit, and a voltage regulator circuit, convert an input voltage respectively into a first supply voltage, a second supply voltage, and at least one third supply voltage. This not only enables the use of a discrete multi-stage power system to replace the functionality of an SBC, providing multiple supply voltages and improving circuit stability and flexibility, but also reduces hardware costs of the circuit design and addresses the supply risk issues associated with SBCs.

## Claims

1. A power supply system, comprising:
an input power source, configured to provide an input voltage;
a first voltage conversion circuit, wherein the first voltage conversion circuit is connected to an output end of the input power source and configured to perform voltage conversion on the input voltage provided by the input power source to generate a first supply voltage;
a second voltage conversion circuit, wherein the second voltage conversion circuit is connected to an output end of the first voltage conversion circuit and configured to perform voltage conversion on the first supply voltage to obtain a second supply voltage; and
at least one voltage regulator circuit, wherein the at least one voltage regulator circuit is connected to at least one of an output end of the input power source, the output end of the first voltage conversion circuit, and an output end of the second voltage conversion circuit, and configured to perform voltage conversion on at least one of the input voltage, the first supply voltage, and the second supply voltage to obtain at least one third supply voltage.

2. The power supply system according to claim 1, wherein the at least one voltage regulator circuit comprises a first voltage regulator circuit, wherein:
the first voltage regulator circuit is connected to the output end of the first voltage conversion circuit and configured to perform voltage conversion on the first supply voltage to obtain the third supply voltage.

3. The power supply system according to claim 1 or 2, wherein the at least one voltage regulator circuit comprises a second voltage regulator circuit, wherein:
the second voltage regulator circuit is connected to the output end of the second voltage conversion circuit and configured to perform voltage conversion on the second supply voltage to obtain the third supply voltage.

4. The power supply system according to claim 1, 2, or 3, wherein the at least one voltage regulator circuit comprises a third voltage regulator circuit, wherein:
the third voltage regulator circuit is connected to the output end of the input power source and configured to perform voltage conversion on the input voltage to obtain the third supply voltage.

5. The power supply system according to claim 4, wherein the at least one voltage regulator circuit further comprises a fourth voltage regulator circuit, wherein:
the fourth voltage regulator circuit is connected to an output end of the third voltage regulator circuit and configured to perform voltage conversion on the third supply voltage output by the third voltage regulator circuit to obtain a fourth supply voltage.

6. The power supply system according to any one of claims 1 to 5, further comprising a detection circuit, wherein:
the detection circuit is connected to an output end of a power supply module in the power supply system and configured to detect an output signal of the power supply module, wherein the power supply module comprises at least one of the following: the first voltage conversion circuit, the second voltage conversion circuit, and the at least one voltage regulator circuit.

7. The power supply system according to claim 6, wherein the detection circuit comprises at least one voltage sampling circuit, wherein:
the at least one voltage sampling circuit is connected to an output end of the power supply module and configured to perform voltage sampling detection on the output signal of the power supply module to obtain at least one voltage sampling signal,
wherein the output signal of the power supply module comprises at least one of the following: the first supply voltage, the second supply voltage, and the at least one third supply voltage.

8. The power supply system according to claim 7, wherein the voltage sampling circuit comprises a first resistor, a second resistor, a third resistor, and a first capacitor, wherein:
a first end of the first resistor is connected to the output end of the power supply module, a second end of the first resistor is connected separately to a first end of the second resistor and a first end of the third resistor, a second end of the second resistor is grounded, and a second end of the first capacitor is grounded; and
a second end of the third resistor is connected to a first end of the first capacitor and configured to output the voltage sampling signal.

9. The power supply system according to claim 7, wherein the voltage sampling circuit comprises a first resistor, a second resistor, a third resistor, and a first capacitor, wherein:
a first end of the first resistor is connected to the output end of the power supply module, a second end of the first resistor is connected separately to a first end of the second resistor and a first end of the first capacitor, a second end of the second resistor is connected separately to a first end of the third resistor and a second end of the first capacitor, and a second end of the third resistor is grounded; and
the first end of the first capacitor and the second end of the first capacitor are configured to output the voltage sampling signal.

10. The power supply system according to claim 6, wherein the detection circuit comprises at least one current sampling circuit, wherein:
the at least one current sampling circuit is connected to the output end of the power supply module and configured to perform current sampling detection on the output signal of the power supply module to obtain at least one current sampling signal,
wherein the output signal of the power supply module comprises at least one of the following: a first supply current output by the first voltage conversion circuit, a second supply current output by the second voltage conversion circuit, and at least one third supply current output by the at least one voltage regulator circuit.

11. The power supply system according to claim 10, wherein the current sampling circuit comprises a current sampling resistor, wherein:
a first end of the current sampling resistor is connected separately to the output end of the power supply module and a first current sampling end of the power supply module, and a second end of the current sampling resistor is connected to a second current sampling end of the power supply module and is configured to obtain the current sampling signal through the current sampling resistor.

12. The power supply system according to claim 10, wherein the current sampling circuit comprises a current transformer, wherein:
a first end of the current transformer is connected to a first current sampling end of the power supply module, a second end of the current transformer is connected to a second current sampling end of the power supply module, and a third end of the current transformer is connected to the output end of the power supply module and is configured to obtain the current sampling signal through the current transformer.

13. The power supply system according to any one of claims 1 to 12, wherein:
the first voltage conversion circuit is further configured to receive a wake-up signal, and to control the first voltage conversion circuit to be in an off state, so as to power down the power supply system when the wake-up signal is at a low level, or to control the first voltage conversion circuit to be in an operating state, so as to power on the power supply system when the wake-up signal is at a high level.

14. The power supply system according to any one of claims 1 to 13, further comprising an enable circuit, wherein the enable circuit is connected separately to an enable end of the second voltage conversion circuit and an enable end of the at least one voltage regulator circuit, wherein:
the enable circuit is configured to send a first enable signal to the second voltage conversion circuit and to control the power-on or power-down of the second voltage conversion circuit based on the first enable signal.

15. The power supply system according to claim 14, wherein:
the enable circuit is further configured to send respective second enable signals to the at least one voltage regulator circuit and to control the power-on or power-down of the at least one voltage regulator circuit based on the second enable signals.

16. The power supply system according to any one of claims 1 to 15, wherein the first voltage conversion circuit and the second voltage conversion circuit are buck-boost type direct current conversion circuits.

17. The power supply system according to any one of claims 1 to 16, wherein the first supply voltage, the second supply voltage, the third supply voltage, and the fourth supply voltage are different.

18. A battery management system, comprising at least one functional circuit and the power supply system according to any one of claims 1 to 17,
wherein the power supply system is configured to provide required power supplies to the at least one functional circuit.
